# EUROPÄISCHE PATENTANMELDUNG

(11) **EP 1 132 938 A2**
(43) Veröffentlichungstag der Anmeldung: **12.09.2001**
(21) Anmeldenummer: 01200748.0
(22) Anmeldetag: 28.02.2001
(51) Int. Cl.: H01J 17/16, H01J 17/49, H01J 1/63

(54) **Plasmabildschirm mit UV-Licht emittierender Schicht**

(30) Priorität: 01.03.2000 DE 10009915
(71) Anmelder: Philips Corporate Intellectual Property GmbH, 52064 Aachen (DE); Koninklijke Philips Electronics N.V., 5621 BA Eindhoven (NL)
(72) Erfinder: Jüstel, Thomas, Dr., 52064 Aachen (DE); Bechtel, Helmut, Dr., 52064 Aachen (DE); Mayr, Walter, 52064 Aachen (DE); Gläser, Harald, Dr., 52064 Aachen (DE); Nikol, Hans, Dr., 52064 Aachen (DE)
(74) Vertreter: Gössmann, Klemens

(57) **Zusammenfassung**

Die Erfindung beschreibt einen Plasmabildschirm, insbesondere einen AC-Plasmabildschirm mit koplanarer Anordnung, mit erhöhter Luminanz. Auf der Frontplatte (1), welche eine Glasplatte (3), auf der eine dielektrische Schicht (4) und eine Schutzschicht (5) aufgebracht sind, oder auf der Trägerplatte (2) mit der Leuchtstoffschicht (10) wird eine UV-Licht emittierende Schicht (8) aufgebracht. Diese enthält einen VUV-Leuchtstoff, der das VUV-Licht der Plasmaentladung in UV-Licht mit einer Wellenlänge zwischen 200 und 350 nm konvertiert und in Richtung der Leuchtstoffschicht (10) emittiert.

## Beschreibung

Die Erfindung betrifft einen Plasmabildschirm ausgerüstet mit einer Frontplatte, die eine Glasplatte, auf der eine dielektrische Schicht und eine Schutzschicht aufgebracht sind, aufweist, mit einer Trägerplatte ausgestattet mit einer Leuchtstoffschicht, mit einer Rippenstruktur, die den Raum zwischen Frontplatte und Trägerplatte in Plasmazellen, die mit einem Gas gefüllt sind, aufteilt und mit einem oder mehreren Elektroden-Arrays auf der Frontplatte und der Trägerplatte zur Erzeugung von stillen elektrischen Entladungen in den Plasmazellen.

Plasmabildschirme ermöglichen Farbbilder mit hoher Auflösung, großer Bildschirmdiagonalen und sind von kompakter Bauweise. Ein Plasmabildschirm weist eine hermetisch abgeschlossene Glaszelle, die mit einem Gas gefüllt ist, mit gitterförmig angeordneten Elektroden auf. Durch Anlegen einer elektrischen Spannung wird eine Gasentladung hervorgerufen, die hauptsächlich Licht im Vakuum-Ultraviolett-Bereich erzeugt. Durch Leuchtstoffe wird dieses VUV-Licht in sichtbares Licht umgewandelt und durch die Frontplatte der Glaszelle zum Betrachter emittiert.

Prinzipiell unterscheidet man zwei Typen von AC-Plasmabildschirmen: eine Matrixanordnung und eine koplanare Anordnung der Elektroden-Arrays. Bei der Matrixanordnung wird die Gasentladung am Kreuzungspunkt zweier Elektroden auf der Front- und der Trägerplatte gezündet und unterhalten. Bei der koplanaren Anordnung wird die Gasentladung zwischen den Elektroden auf der Frontplatte unterhalten und am Kreuzungspunkt mit einer Elektrode, einer sogenannten Adresselektrode, auf der Trägerplatte gezündet. Die Adresselektrode befindet sich in diesem Fall unter der Leuchtstoffschicht.

Die Luminanz eines Plasmabildschirms hängt von verschiedenen Faktoren ab: 1. mit welcher Effizienz VUV-Licht bei der Plasmaentladung erzeugt wird, 2. mit welcher Effizienz die Leuchtstoffe durch das VUV-Licht angeregt werden, 3. mit welcher Effizienz die Leuchtstoffe VUV-Licht in sichtbares Licht überführen und 4. mit welcher Effizienz das sichtbare Licht aus der Plasmazelle zum Betrachter gelangt.

Bei einer koplanaren Anordnung der Elektrodenarrays gelangt die Hälfte des bei Gasentladung erzeugten VW-Lichtes auf die Frontplatte, wo es in den dortigen Schichten absorbiert wird. Für einen Teil des VUV-Lichtes wird dieser Effekt noch verstärkt, da das VUV-Licht im Gasraum reabsorbiert wird, indem Gasatome vom Grundzustand in einen energetisch höheren Zustand angeregt werden. Das Licht wird zwar anschließend wieder emittiert, wird aber aus seiner ursprünglichen Richtung abgelenkt, so dass auch Licht, das sich ursprünglich in Richtung der Leuchtstoffschicht ausgebreitet hat, auf die Frontplatte gelangen kann. Dies vermindert die Effizienz mit der die Leuchtstoffe durch das VUV-Licht angeregt werden.

Damit das VUV-Licht, welches in Richtung Trägerplatte emittiert wird, möglichst komplett von der Leuchtstoffschicht absorbiert und in sichtbares Licht überführt wird, muss die Leuchtstoffschicht ausreichend dick und dicht sein. VUV-Photonen, die nicht von der Leuchtstoffschicht absorbiert werden, gelangen auf die Trägerplatte und werden dann dort absorbiert. Um dies zu verhindern, werden relativ dicke Leuchtstoffschichten verwendet oder die Teilchengröße der Leuchtstoffe wird reduziert, was zu einer Verringerung der VUV-Transmission bei gleicher Schichtdicke führt. Nachteilig ist aber, dass mit abnehmendem Teilchendurchmesser die Effizienz der Leuchtstoffe sinkt und insbesondere die blau-emittierenden Leuchtstoffe eine erhöhte Degradation aufweisen.

Der Erfindung liegt die Aufgabe zugrunde, einen Plasmabildschirm mit verbesserter Luminanz bereitzustellen.

Diese Aufgabe wird gelöst, durch einen Plasmabildschirm ausgerüstet mit einer Frontplatte, die eine Glasplatte, auf der eine dielektrische Schicht und eine Schutzschicht aufgebracht sind, aufweist, mit einer Trägerplatte ausgestattet mit einer Leuchtstoffschicht, mit einer Rippenstruktur, die den Raum zwischen Frontplatte und Trägerplatte in Plasmazellen, die mit einem Gas gefüllt sind, aufteilt, mit einem oder mehreren Elektroden-Arrays auf der Frontplatte und der Trägerplatte zur Erzeugung von stillen elektrischen Entladungen in den Plasmazellen und einer UV-Licht emittierenden Schicht.

Es ist besonders bevorzugt, dass die UV-Licht emittierende Schicht auf der Schutzschicht aufgebracht ist.

In der UV-Licht emittierenden Schicht wird das aus der Plasmaentladung stammende und in Richtung Frontplatte emittierte VUV-Licht in UV-Licht überführt. Letzteres wird in Richtung der Leuchtstoffschicht emittiert, wo es in sichtbares Licht konvertiert wird. Da die in Richtung der Frontplatte emittierten VUV-Photonen dort nicht absorbiert, sondern in UV-Photonen überführt werden, regen deutlich mehr Photonen die Leuchtstoffe auf der Trägerplatte an.

Es ist auch bevorzugt, dass die UV-Licht emittierende Schicht zwischen Trägerplatte und Leuchtstoffschicht aufgebracht ist.

Transmittierte VUV-Photonen werden nicht von der Trägerplatte absorbiert, sondern von der UV-Licht emittierenden Schicht in UV-Photonen überführt. Letztere werden in Richtung der Leuchtstoffschicht emittiert und regen dann die Leuchtstoffe an.

Es ist ganz besonders bevorzugt, dass die UV-Licht emittierende Schicht UV-C-Licht emittiert.

Durch Bestrahlung mit UV-C-Licht kann die Photodegradation von Leuchtstoffen durch VUV-Licht, wie beispielsweise von Eu²⁺-aktivierten Leuchtstoffen, in der Leuchtstoffschicht verhindert werden.

Es ist bevorzugt, dass die UV-Licht emittierende Schicht einen VUV-Leuchtstoff mit einem Wirtsgitter ausgewählt aus der Gruppe der Aluminate, Borate, Fluoride, Oxide, Phosphate oder Sulfate enthält.

Diese Wirtsgitter sind effiziente VUV-Leuchtstoffgitter, da sie eine große Bandlücke aufweisen.

Es ist weiterhin bevorzugt, dass die UV-Licht emittierende Schicht einen VUV-Leuchtstoff, der durch Pb²⁺, Ce³⁺, Pr³⁺ oder Bi³⁺ aktiviert ist, enthält.

Diese Schwermetallionen sind geeignete Aktivatoren für VUV-Leuchtstoffe.

Es ist außerdem bevorzugt, dass der VUV-Leuchtstoff in der UV-Licht emittierenden Schicht ausgewählt ist aus der Gruppe SrAl₁₂O₁₉:Ce, LaPO₄:Ce, CeMgAl₁₁O₁₉:Ce, LuBO₃:Pr, GdBO₃:Pr, LaBO₃:Pr, YBO₃:Pr, LaPO₄:Pr, YPO₄:Pr, LuPO₄:Pr, LaB₃O₆:Pr, SrSiO₃:Pb, MgSO₄:Pb, CaSO₄:Pb, SrSO₄:Pb, (Ca,Mg)SO₄:Pb, (Sr,Ca)SO₄:Pb, CaLi₂SiO₄:Pb, Ba(Y,Gd,Lu)B₉O₁₆:Bi, YF₃:Bi, YOF:Bi, Y₃Al₅O₁₂:Bi und (Gd,La)B₃O₆:Bi.

All diese VUV-Leuchtstoffe weisen eine kleine Stokes-Verschiebung auf, das heißt der Energieabstand zwischen Anregungs- und Emissionsbande ist klein, so dass diese Leuchtstoffe UV-Licht und kein sichtbares Licht emittieren.

Es ist ganz besonders bevorzugt, dass der VUV-Leuchtstoff in der UV-Licht emittierenden Schicht LaPO₄:Pr ist.

LaPO₄:Pr erhöht besonders effizient die Luminanz eines Plasmabildschirm, da es eine hohe Quantenausbeute Φ von Φ ≥ 80 % aufweist.

Es ist ganz besonders bevorzugt, dass die Partikel des VUV-Leuchtstoffes mit MgO beschichtet sind.

Eine Beschichtung aus MgO wirkt als stabilisierender Schutzüberzug, der die Photodegradation von den VUV-Leuchtstoffen vermindert. MgO bildet eine harte, wasserunlösliche Beschichtung auf den VUV-Leuchtstoffpartikeln, es reagiert nicht mit dem VUV-Leuchtstoff und wird selbst durch Strahlung nicht degradiert. Da Magnesiumoxid selbst farblos ist, beeinflusst es auch nicht den Farbwert des VUV-Leuchtstoffes.

In einer vorteilhaften Ausführung ist auf der Frontplatte eine UV-Licht reflektierende Schicht aufgebracht.

Diese Schicht hat die Aufgabe, UV-Licht, welches in Richtung Frontplatte emittiert wird, in Richtung der Leuchtstoffe zu reflektieren.

Es ist bevorzugt, dass die UV-Licht reflektierende Schicht Partikel ausgewählt aus der Gruppe SiO₂, MgF₂, Al₂O₃, MgO, Nb₂O₅, ZrO₂, Ta₂O₅, CaPO₄, LaPO₄, YPO₄, MgAl₂O₄ undYBO₃, deren mittlere Partikelgröße jeweils zwischen 100 nm und 500 nm liegt, enthält.

Partikel dieser Zusammensetzungen zeigen im Wellenlängenbereich von 200 bis 400 nm keine oder nur geringe Absorption und widerstehen den hohen Temperaturen während der Herstellung eines Plasmabildschirms. Außerdem weisen Partikel dieses Durchmessers eine deutlich größere Lichtstreuung im UV-Wellenlängenbereich als im sichtbaren Wellenlängenbereich auf. Dies führt auch dazu, dass die UV-Licht reflektierende Schicht durchlässig für sichtbares Licht ist.

Eine andere vorteilhafte Ausführungsform sieht vor, dass die UV-Licht reflektierende Schicht eine Schichtabfolge aus Schichten mit einem Brechungsindex n ≥ 1.7 und aus Schichten mit einem Brechungsindex n ≤ 1.5 enthält.

In dieser Ausführungsform sind die in den Schichtabfolgen verwendeten Materialien durchlässig für UV-Licht und sichtbares Licht. Die einzelnen Schichtdicken werden so gewählt, dass durch Interferenz das UV-Licht reflektiert während sichtbares Licht optimal durchgelassen wird.

Es ist auch bevorzugt, dass in den Leuchtstoffschichten auf der Trägerplatte der blau-emittierenden Leuchtstoff BaMgAl₁₀O₁₇:Eu, der grün-emittierende Leuchtstoff ausgewählt aus der Gruppe Zn₂SiO₄:Mn und BaMgAl₁₀O₁₇:Eu,Mn und der rot-emittierende Leuchtstoff ausgewählt aus der Gruppe (Y,Gd)BO₃:Eu, Y₂O₃:Eu und Y(V,P)O₄:Eu ist.

Je nach Emissionswellenlänge des verwendeten VUV-Leuchtstoffes werden die blau-, rotund grün-emittierenden Leuchtstoffe ausgewählt. Durch den Einsatz der VUV-Leuchtstoffe können in den Leuchtstoffschichten Leuchtstoffe verwendet werden, deren Anregungsbereich außerhalb des VUV-Bereichs liegt. So kann beispielsweise anstelle des häufig eingesetzten (Y,Gd)BO₃ als rot-emittierender Leuchtstoff Y(V,P)O₄:Eu Verwendung finden, welches einen besseren Farbpunkt aufweist.

Im folgenden soll anhand von zwei Figuren und vier Ausführungsbeispielen die Erfindung näher erläutert werden. Dabei zeigt
- Fig. 1: den Aufbau und das Funktionsprinzip einer einzelnen Plasmazelle in einem AC-Plasmabildschirm mit einer UV-Licht emittierenden Schicht auf der Frontplatte und
- Fig. 2: den Aufbau und das Funktionsprinzip einer einzelnen Plasmazelle in einem AC-Plasmabildschirm mit einer UV-Licht emittierenden Schicht auf der Trägerplatte.

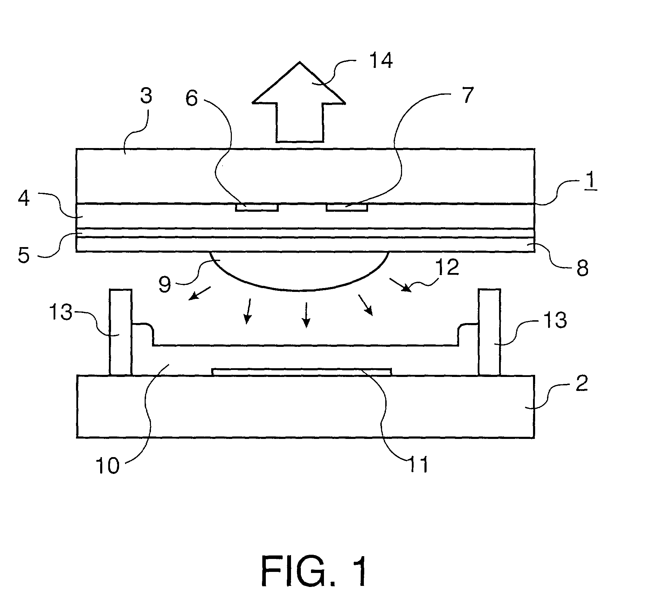

Gemäß Fig. 1 weist eine Plasmazelle eines AC-Plasmabildschirms mit einer koplanaren Anordnung eine Frontplatte 1 und eine Trägerplatte 2 auf. Die Frontplatte 1 enthält eine Glasplatte 3, auf der eine dielektrische Schicht 4 und darauf eine Schutzschicht 5 aufgebracht sind. Die Schutzschicht 5 ist bevorzugt aus MgO und die dielektrische Schicht 4 ist beispielsweise aus PbO-haltigem Glas. Auf die Glasplatte 3 sind parallele, streifenförmige Entladungselektroden 6,7 aufgebracht, die von der dielektrischen Schicht 4 bedeckt sind. Die Entladungselektroden 6,7 sind zum Beispiel aus Metall oder ITO. Auf der Schutzschicht 5 ist eine UV-Licht emittierende Schicht 8 aufgebracht, welche Strahlung 12 im VUV-Bereich in UV-Strahlung der Wellenlängen 200 bis 350 nm konvertiert. Die Trägerplatte 2 ist aus Glas und auf der Trägerplatte 2 sind parallele, streifenförmige, senkrecht zu den Entladungselektroden 6,7 verlaufende Adresselektroden 11 aus beispielsweise Ag aufgebracht. Diese sind von einer Leuchtstoffschicht 10, die in einer der drei Grundfarben rot, grün oder blau emittiert, bedeckt. Die einzelnen Plasmazellen sind durch eine Rippenstruktur 13 mit Trennrippen aus vorzugsweise dielektrischem Material getrennt.

In der Plasmazelle, als auch zwischen den Entladungselektroden 6,7, von denen jeweils eine im Wechsel als Kathode bzw. Anode wirkt, befindet sich ein Gas, vorzugsweise ein Edelgasgemisch aus beispielsweise He, Ne, Xe oder Kr. Nach Zündung der Oberflächenentladung, wodurch Ladungen auf einem zwischen den Entladungselektroden 6,7 im Plasmabereich 9 liegenden Entladungsweg fließen können, bildet sich im Plasmabereich 9 ein Plasma, durch das je nach der Zusammensetzung des Gases Strahlung 12 im UV-Bereich, insbesondere im VUV-Bereich, erzeugt wird. Diese Strahlung 12 und die von der UV-Licht emittierenden Schicht 8 abgestrahlte UV-Strahlung regen die Leuchtstoffschicht 10 zum Leuchten an, die sichtbares Licht 14 in einer der drei Grundfarben emittiert, das durch die Frontplatte 1 nach außen tritt und somit einen leuchtenden Bildpunkt auf dem Bildschirm darstellt.

Die dielektrische Schicht 4 über den transparenten Entladungselektroden 6,7 dient unter anderem bei AC-Plasmabildschirmen dazu, eine direkte Entladung zwischen den aus leitfähigem Material bestehenden Entladungselektroden 6,7 und damit die Ausbildung eines Lichtbogens bei Zündung der Entladung zu unterbinden.

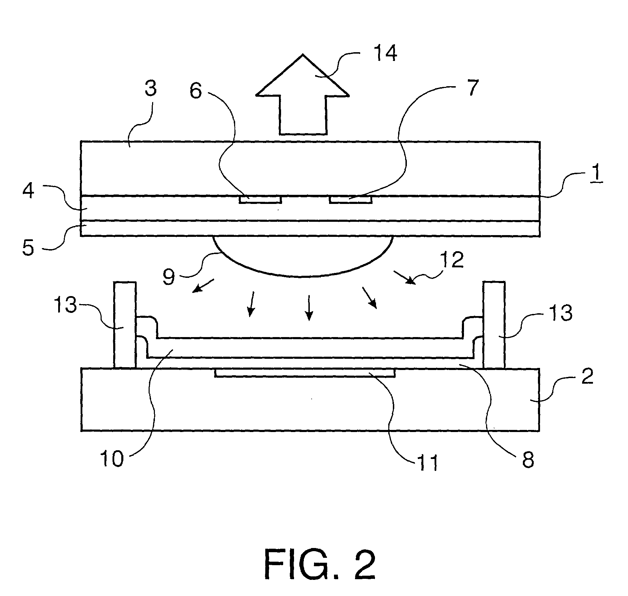

In Fig. 2 ist der Aufbau und das Funktionsprinzip einer einzelnen Plasmazelle in einem AC-Plasmabildschirm, welcher eine UV-Licht emittierenden Schicht 8 auf der Trägerplatte 2 aufweist, gezeigt. Der Aufbau dieser Plasmazelle ist völlig analog der Plasmazelle aus Fig. 1 abgesehen davon, dass sich die UV-Licht emittierende Schicht 8 zwischen Trägerplatte 2 und Leuchtstoffschicht 10 befindet. Diese UV-Licht emittierende Schicht 8 konvertiert Strahlung 12 im VUV-Bereich, welche von der Leuchtstoffschicht 10 transmittiert wird, in UV-Strahlung der Wellenlängen 200 bis 350 nm. Diese UV-Strahlung regt die Leuchtstoffschicht 10 zum Leuchten an, die sichtbares Licht 14 in einer der drei Grundfarben emittieren, das durch die Frontplatte 1 nach außen tritt und somit einen leuchtenden Bildpunkt auf dem Bildschirm darstellt. Ansonsten ist das Funktionsprinzip analog wie bei einem Plasmabildschirm, der eine UV-Licht emittierende Schicht 8 auf der Frontplatte 1 aufweist.

Zur Herstellung einer Frontplatte 1 mit einer UV-Licht emittierenden Schicht 8 werden zunächst auf einer Glasplatte 3, deren Größe der gewünschten Bildschirmgröße entspricht, mittels Aufdampfverfahren und anschließender Strukturierung die Entladungselektroden 6,7 aufgebracht. Anschließend werden eine dielektrische Schicht 4 und auf die dielektrische Schicht 4 eine Schutzschicht 5 aufgebracht. Anschließend wird auf die Schutzschicht 5 die UV-Licht emittierende Schicht 8 aufgebracht.

Als Herstellungsverfahren für eine solche UV-Licht emittierende Schicht 8 kommen sowohl Trockenbeschichtungsverfahren, z. B. elektrostatische Abscheidung oder elektrostatisch unterstütztes Bestäuben, als auch Nassbeschichtungsverfahren in Betracht. Bei letzteren kann eine durchgehende Schicht durch Spincoating, Meniscuscoating oder Bladecoating aufgebracht werden. Wenn eine Strukturierung der Schicht gewünscht ist, können Druckverfahren wie Siebdruck oder Flexodruck angewandt werden.

Für die Nassbeschichtungsverfahren wird ein VUV-Leuchtstoff, wie zum Beispiel SrAl₁₂O₁₉:Ce, LaPO₄:Ce, CeMgAl₁₁O₁₉:Ce, LuBO₃:Pr, GdBO₃:Pr, LuPO₄:Pr, LaBO₃:Pr, YBO₃:Pr, LaPO₄:Pr, YPO₄:Pr, LaB₃O₆:Pr, SrSiO₃:Pb, MgSO₄:Pb, CaSO₄:Pb, SrSO₄:Pb, (Ca,Mg)SO₄:Pb, (Sr,Ca)SO₄:Pb, CaLi₂SiO₄:Pb, Ba(Y,Gd,Lu)B₉O₁₆:Bi, YF₃:Bi, YOF:Bi, Y₃Al₅O₁₂:Bi oder (Gd,La)B₃O₆:Bi in einem organischen Lösemittel, gegebenenfalls zusammen mit einem Dispergiermittel, einem Tensid und einem Antischaummittel oder einer Bindemittelzubereitung dispergiert. Geeignet für Bindemittelzubereitungen für Plasmabildschirme sind anorganischen Bindemittel, die die Betriebstemperatur des Plasmabildschirms ohne Zersetzung, Versprödung oder Verfärbung überstehen, oder organische Bindemittel, die im weiteren Verlauf der Herstellung des Plasmabildschirms durch Oxidation entfernt werden.

Sollen die Partikel des VUV-Leuchtstoffes in der UV-Licht emittierenden Schicht 8 eine Beschichtung aus MgO aufweisen, wird zunächst der beschichtete VUV-Leuchtstoff hergestellt. Dazu werden ein oder mehrere wasserlösliche Magnesiumsalze wie zum Beispiel ein Nitrat, ein Acetat oder ein Perchlorat, in Wasser gelöst und der pH-Wert der Lösung wird auf einen pH-Wert von 7 eingestellt. In dieser Lösung wird der zu beschichtende VUV-Leuchtstoff dispergiert. Anschließend wird der pH-Wert dieser Suspension auf über 9 erhöht, so dass sich Mg(OH)₂ auf den Partikeln des VUV-Leuchtstoffes abscheidet. Der mit Mg(OH)₂ beschichtete VUV-Leuchtstoff wird abfiltriert, getrocknet und anschließend bei erhöhter Temperatur kalziniert, so dass Mg(OH)₂ in MgO überführt wird. Danach wird wie oben beschrieben eine Suspension des beschichteten VUV-Leuchtstoffes hergestellt und zur Beschichtung der Schutzschicht 5 verwendet.

Anschließend wird die Frontplatte 1 zusammen mit weiteren Komponenten, wie zum Beispiel einer Trägerplatte 2 mit Adresselektroden 11, die von Leuchtstoffschichten 10, die in einer der drei Grundfarben rot, grün oder blau emittieren, bedeckt ist, und einem Edelgasgemisch, zur Herstellung eines AC-Plasmabildschirms verwendet.

Die Herstellung einer Trägerplatte 2, welche eine UV-Licht emittierende Schicht 8 aufweist, erfolgt analog wie für die Frontplatte 1 beschrieben. Nach Aufbringen der UV-Licht emittierenden Schicht 8 auf die Trägerplatte 2 wird diese getrocknet und anschließend wird die Leuchtstoffschicht 10 aufgebracht. Als Herstellungsverfahren für eine solche Leuchtstoffschicht 10 kommen sowohl Trockenbeschichtungsverfahren, z. B. elektrostatische Abscheidung oder elektrostatisch unterstütztes Bestäuben, als auch Nassbeschichtungsverfahren, z. B. Siebdruck, Dispenserverfahren, bei denen eine Suspension mit einer sich dem Kanälen entlang bewegenden Düse eingebracht wird, oder Sedimentation aus der flüssigen Phase, in Betracht.

Für die Nassbeschichtungsverfahren müssen die Leuchtstoffe in Wasser, einem organischen Lösemittel, gegebenenfalls zusammen mit einem Dispergiermittel, einem Tensid und einem Antischaummittel oder einer Bindemittelzubereitung dispergiert werden. Geeignet für Bindemittelzubereitungen für Plasmabildschirme sind anorganische Bindemittel, die eine Betriebstemperatur von 250°C ohne Zersetzung, Versprödung oder Verfärbung überstehen, oder organische Bindemittel, die später durch Oxidation entfernt werden können.

Nach Aufbringen der Leuchtstoffschichten 10 wird die Trägerplatte 2 zusammen mit weiteren Komponenten wie zum Beispiel einer Frontplatte 1 und einem Edelgasgemisch zur Herstellung eines AC-Plasmabildschirms verwendet.

Die Wellenlänge des UV-Lichtes, das von der UV-Licht emittierenden Schicht 8 in Richtung der Leuchtstoffschicht 10 ausgesendet wird, bestimmt die Wahl der rot, blau bzw. grün emittierende Leuchtstoffe in der Leuchtstoffschicht 10. Bei Einsatz eines VUV-Leuchtstoffes der UV-Licht mit einer Wellenlänge zwischen 200 und 250 nm emittiert, werden beispielsweise die Leuchtstoffe BaMgAl₁₀O₁₇:Eu, Zn₂SiO₄:Mn und (Y,Gd)BO₃:Eu in der Leuchtstoffschicht 10 verwendet. Wahlweise kann auch Y₂O₃:Eu als rot-emittierender Leuchtstoff in der Leuchtstoffschicht 10 verwendet werden. Emittiert der VUV-Leuchtstoff UV-Licht mit einer Wellenlänge zwischen 250 und 300 nm können die Leuchtstoffe BaMgAl₁₀O₁₇:Eu, Zn₂SiO₄:Mn und Y(V,P)O₄:Eu verwendet werden. Und bei Emission von UV-Licht mit einer Wellenlänge zwischen 300 und 350 nm können die Leuchtstoffe BaMgAl₁₀O₁₇:Eu, BaMgAl₁₀O₁₇:Eu,Mn und Y(V,P)O₄:Eu eingesetzt werden.

Die Verwendung eines VUV-Leuchtstoffes in der UV-Licht reflektierenden Schicht 8, der UV-C-Licht abstrahlt ist besonders vorteilhaft, um die Photodegradation einiger Leuchtstoffe, beispielsweise Eu²⁺-aktivierter Leuchtstoffe, unter VUV-Anregung zu verhindern.

Bei Bestrahlung eines Eu²⁺-aktivierten Leuchtstoffes mit UV-Licht, dessen Wellenlänge 200 nm oder mehr beträgt, wird der Aktivator Eu²⁺ direkt angeregt. Das elektronisch angeregte Eu²⁺-Kation kehrt unter Aussendung eines Photons mit der Wellenlänge 450 nm wieder in den Grundzustand zurück.

Die Anregung der Eu²⁺-aktivierten Leuchtstoffe mit VUV-Licht dagegen führt zu einer Anregung des Wirtsgitters. Daraus resultiert eine Bildung von Excitonen (Elektron-Loch-Paaren). Ein gebildetes Loch wird von einem Eu²⁺-Kation unter Ausbildung eines Eu³⁺-Kations abgefangen. Das verbliebene Elektron kann einerseits von einem Eu³⁺-Kation unter Ausbildung eines aktivierten Eu²⁺-Kations, welches dann wiederum in den Grundzustand unter Aussendung eines Photons der Wellenlänge 450 nm zurückkehrt, abgefangen werden. Andererseits kann ein Elektron von einer Fehlstelle, Anionen-Leerstelle oder auch Farbzentrum genannt, im Kristallgitter des Leuchtstoffes abgefangen werden. Problematisch ist in diesem Fall, dass vermehrt Eu³⁺-Kationen zurückbleiben, die die Lumineszenz der Eu²⁺-Kation stören.

In Eu²⁺-aktivierten BaMgAl₁₀O₁₇:Eu liegen diese Anionen-Leerstellen ungefähr 5 eV unterhalb des Leitungsbandes des jeweiligen Leuchtstoffes. Ein in einer solchen Anionen-Leerstelle befindliches Elektron kann durch Zufuhr entsprechender Energie wieder freigesetzt werden. Das freigesetzte Elektron kann anschließend entweder von einem Eu³⁺-Kation oder erneut durch eine Anionen-Leerstelle abgefangen werden. In letzterem Fall kann es aber durch erneute Energiezufuhr wieder freigesetzt werden.

Die, für die Freisetzung eines Elektrons aus einer Anionen-Leerstelle, benötigte Energie entspricht dem Energiebereich von UV-C-Strahlung von 200 bis 300 nm. Durch "Bestrahlung" des Leuchtstoffes mit UV-C-Strahlung wird die benötigte Energie, um durch Anion-Leerstellen abgefangene Elektronen wieder freizusetzen, zugeführt. Die Elektronen können sozusagen recycelt werden.

Außerdem ist die Eindringtiefe von UV-C-Strahlung in die Leuchtstoffpartikel deutlich höher als die von VUV-Strahlung, da Leuchtstoffe in der Regel im VUV-Licht-Bereich eine höhere Absorptionskonstante besitzen. Die höhere Eindringtiefe resultiert in einem besseren Sättigungsverhalten, da in den einzelnen Partikeln mehr Aktivatoren erreicht werden können.

Alternativ kann sich auf der Frontplatte 1 beispielsweise zwischen Schutzschicht 5 und UV-Licht emittierender Schicht 8 oder auf der Schutzschicht 5 noch eine UV-Licht reflektierende Schicht befinden. Diese enthält eine Schicht aus Partikeln mit einem Durchmesser zwischen 100 nm und 500 nm, welche eine deutlich größere Lichtstreuung im UV-Wellenlängenbereich als im sichtbaren Wellenlängenbereich aufweisen. Zur Herstellung einer solchen UV-Licht reflektierenden Schicht wird eine wässrige Suspension von SiO₂, MgF₂, Al₂O₃, MgO, Nb₂O₅, ZrO₂, Ta₂O₅, LaPO₄, YPO₄, CaPO₄, MgAl₂O₄ oder YBO₃ hergestellt, der anschließend ein Assoziativverdicker und/oder ein Dispergiermittel zugesetzt werden kann. Diese Suspension wird mit einem der eingangs beschriebenen Verfahren auf die Schutzschicht 5 aufgebracht und getrocknet, Soll sich die UV-Licht emittierende Schicht 8 auf der Frontplatte 1 befinden, wird anschließend die UV-Licht emittierende Schicht 8 auf die UV-Licht reflektierende Schicht aufgebracht.

Die UV-Licht reflektierende Schicht kann aber auch eine Schichtabfolge aufweisen. Die einzelnen Schichten besitzen einen unterschiedlichen Brechungsindex. So enthält die Schichtabfolge abwechselnd Schichten mit einem Brechungsindex n ≥ 1.7 und Schichten mit einem Brechungsindex n ≤ 1.5 auf. Zur Herstellung einer solchen Schichtabfolge werden abwechselnd Schichten aus MnS oder MgO und Schichten aus SiO₂ aufgesputtert oder aufgedampft. Die Schichten aus ZnS oder MgO weisen einen Brechungsindex von n ≥ 1.7 und die Schichten aus SiO₂ einen Brechungsindex von n ≤ 1.5 auf. Beide Schichten werden gleich oft aufgebracht.

Grundsätzlich kann eine UV-Licht emittierende Schicht 8 für alle Typen von Plasmabildschirmen, wie zum Beispiel bei AC-Plasmabildschirmen mit oder ohne Matrixanordnung der Elektrodenarrays oder DC-Plasmabildschirmen eingesetzt werden.

Im folgenden werden Ausführungsformen der Erfindung erläutert, die beispielhafte Realisierungsmöglichkeiten darstellen.

### Ausführungsbeispiel 1

Zunächst wurde eine Suspension von LaPO₄:Pr hergestellt, der Additive wie ein organisches Bindemittel und ein Dispersionsmittel zugesetzt wurden. Mittels Spincoating wurde die Suspension des VUV-Leuchtstoffes auf die Schutzschicht 5 einer Frontplatte 1, welche eine Glasplatte 3, eine dielektrische Schicht 4, eine Schutzschicht 5 und Entladungselektroden 6,7 aufweist, aufgebracht. Die dielektrische Schicht 4 enthielt PbO-haltiges Glas, die Schutzschicht 5 enthielt MgO und die beiden Entladungselektroden 6,7 waren aus ITO.

Die gesamte Frontplatte 1 wurde getrocknet und zwei Stunden bei 400 bis 600 °C nachbehandelt. Die Schichtdicke der UV-Licht emittierenden Schicht 8 betrug 5 µm. Anschließend wurde die Frontplatte 1 zum Bau eines Plasmabildschirms verwendet, der erhöhte Luminanz aufwies.

### Ausführungsbeispiel 2

100 ml einer 10-prozentigen kolloidalen Suspension von SiO₂-Partikeln mit einem Partikeldurchmesser von 200 nm wurden mit 10 ml einer 10-prozentigen Pigmentdispergiermittel-Lösung und 20 ml einer 10-prozentigen Assoziativverdicker-Lösung versetzt. Das gesamte Gemisch wurde sorgfältig gemischt. Mittels Spincoaten wurde Schicht von SiO₂-Partikeln als UV-Licht reflektierende Schicht auf die Schutzschicht 5 einer Frontplatte 1, welche eine Glasplatte 3, eine dielektrische Schicht 4, eine Schutzschicht 5 und Entladungselektroden 6,7 aufweist, aufgebracht. Die dielektrische Schicht 4 enthielt PbO-haltiges Glas, die Schutzschicht 5 enthielt MgO und die beiden Entladungselektroden 6,7 waren aus ITO.

Als nächstes wurde eine Suspension von LaPO₄:Pr hergestellt, der Additive wie ein organisches Bindemittel und ein Dispersionsmittel zugesetzt wurden. Mittels Spincoating wurde die Suspension auf die UV-Licht reflektierende Schicht aufgebracht.
Die gesamte Frontplatte 1 wurde getrocknet und zwei Stunden bei 400 bis 600 °C nachbehandelt. Die Schichtdicke der UV-Licht emittierenden Schicht 8 aus LaPO₄:Pr betrug 1.5 um und die der UV-Licht reflektierenden Schicht aus SiO₂ betrug 2 µm. Anschließend wurde die Frontplatte 1 zum Bau eines Plasmabildschirms verwendet, der erhöhte Luminanz aufwies.

### Ausführungsbeispiel 3

Zunächst wurden 1.0 g Mg(NO₃)₂ •6H₂O (3.9 mmol) in 50 ml destilliertem Wasser gelöst. 8.0 g YPO₄:Pr wurden in 50 ml destilliertem Wasser suspendiert und anschließend wurde zu dieser Suspension die Magnesiumnitrat-Lösung gegeben. Der pH-Wert der erhaltenen Suspension wurde durch Aufleiten von Ammoniak auf 9.1 erhöht. Nach Abscheidung von Mg(OH)₂ auf den VUV-Leuchtstoffpartikeln wurde der beschichtete Leuchtstoff abfiltriert, bei 80 °C getrocknet und schließlich 2 h bei 450 °C kalziniert.

Als nächstes wurde eine Suspension des mit MgO-beschichteten VUV-Leuchtstoffes hergestellt, der Additive wie ein organisches Bindemittel und ein Dispersionsmittel zugesetzt wurden. Mittels Spincoating wurde die Suspension auf die Schutzschicht 5 einer Frontplatte 1, welche eine Glasplatte 3, eine dielektrische Schicht 4, eine Schutzschicht 5 und Entladungselektroden 6,7 aufweist, aufgebracht.

Die gesamte Frontplatte 1 wurde getrocknet und zwei Stunden bei 400 bis 600 °C nachbehandelt. Die Schichtdicke der UV-Licht emittierenden Schicht 8 betrug 3 µm. Anschließend wurde die Frontplatte 1 zum Bau eines Plasmabildschirms verwendet, der erhöhte Luminanz aufwies.

### Ausführungsbeispiel 4

Zunächst wurde eine Suspension von LaPO₄:Pr hergestellt, der Additive wie ein organisches Bindemittel und ein Dispersionsmittel zugesetzt wurden. Mittels Siebdruck wurde die Suspension des VUV-Leuchtstoffes auf einer Trägerplatte 2 aufgebracht und getrocknet. Anschließend wurde eine Suspension des blau-emittierenden Leuchtstoffes BaMgAl₁₀O₁₇:Eu hergestellt, der Additive wie ein organisches Bindemittel und ein Dispersionsmitte! zugesetzt wurden. Mittels Siebdruck wurde die Suspension auf der UV-Licht emittierenden Schicht 8 aufgebracht und getrocknet. Dieser Prozessschritt wurde nacheinander für die anderen beiden Leuchtstofftypen der Emissionsfarben Grün und Rot durchgeführt.

Durch thermische Behandlung der Trägerplatte 2 bei 400 bis 600 °C in sauerstoffhaltiger Atmosphäre wurden alle in den Leuchtstoffschichten 10 verbliebenen Additive entfernt. Eine derartige Trägerplatte 2 wurde dann zum Bau eines Plasmabildschirms mit erhöhter Luminanz verwendet.

## Patentansprüche

1. Plasmabildschirm ausgerüstet mit einer Frontplatte (1), die eine Glasplatte (3), auf der eine dielektrische Schicht (4) und eine Schutzschicht (5) aufgebracht sind, aufweist, mit einer Trägerplatte (2) ausgestattet mit einer Leuchtstoffschicht (10), mit einer RippenStruktur (13), die den Raum zwischen Frontplatte (1) und Trägerplatte (2) in Plasmazellen, die mit einem Gas gefüllt sind, aufteilt, mit einem oder mehreren Elektroden-Arrays (6,7,11) auf der Frontplatte (1) und der Trägerplatte (2) zur Erzeugung von stillen elektrischen Entladungen in den Plasmazellen und mit einer UV-Licht emittierenden Schicht (8).

2. Plasmabildschirm nach Anspruch 1,
**dadurch gekennzeichnet**,
dass die UV-Licht emittierende Schicht (8) auf der Schutzschicht (5) aufgebracht ist.

3. Plasmabildschirm nach Anspruch 1,
**dadurch gekennzeichnet**,
dass die UV-Licht emittierende Schicht (8) zwischen Trägerplatte (2) und Leuchtstoffschicht (10) aufgebracht ist.

4. Plasmabildschirm nach Anspruch 1,
**dadurch gekennzeichnet**,
dass die UV-Licht emittierende Schicht (8) UV-C-Licht emittiert.

5. Plasmabildschirm nach Anspruch 1,
**dadurch gekennzeichnet**,
dass die UV-Licht emittierende Schicht (8) einen VUV-Leuchtstoff mit einem Wirtsgitter ausgewählt aus der Gruppe der Aluminate, Borate, Fluoride, Oxide, Phosphate und Sulfate enthält.

6. Plasmabildschirm nach Anspruch 1,
**dadurch gekennzeichnet**,
dass die UV-Licht emittierende Schicht (8) einen VUV-Leuchtstoff enthält, der durch ein Ion ausgewählt aus der Gruppe Pb²⁺, Ce³⁺, Pr³⁺ und Bi³⁺ aktiviert ist.

7. Plasmabildschirm nach Anspruch 1,
**dadurch gekennzeichnet**,
dass der VUV-Leuchtstoff in der UV-Licht emittierenden Schicht (8) ausgewählt ist aus der Gruppe SrAl₁₂O₁₉:Ce, LaPO₄:Ce, CeMgAl₁₁O₁₉:Ce, LuBO₃:Pr, GdBO₃:Pr, LuPO₄:Pr, LaBO₃:Pr, YBO₃:Pr, LaPO₄:Pr, YPO₄:Pr, LaB₃O₆:Pr, SrSiO₃:Pb, MgSO₄:Pb, CaSO₄:Pb, SrSO₄:Pb, (Ca,Mg)SO₄:Pb, (Sr,Ca)SO₄:Pb, CaLi₂SiO₄:Pb, Ba(Y,Gd,Lu)B₉O₁₆:Bi, YF₃:Bi, YOF:Bi, Y₃Al₅O₁₂:Bi und (Gd,La)B₃O₆:Bi.

8. Plasmabildschirm nach Anspruch 7,
**dadurch gekennzeichnet**,
dass der VUV-Leuchtstoff in der UV-Licht emittierende Schicht (8) LaPO₄:Pr ist.

9. Plasmabildschirm nach Anspruch 5, 6, 7 oder 8,
**dadurch gekennzeichnet**,
dass die Partikel des VUV-Leuchtstoffes mit MgO beschichtet sind.

10. Plasmabildschirm nach Anspruch 1,
**dadurch gekennzeichnet**,
dass auf der Frontplatte (1) eine UV-Licht reflektierende Schicht aufgebracht ist.

11. Plasmabildschirm nach Anspruch 10,
**dadurch gekennzeichnet**,
dass die UV-Licht reflektierende Schicht Partikel ausgewählt aus der Gruppe SiO₂, MgF₂, Al₂O₃, MgO, Nb₂O₅, ZrO₂, Ta₂O₅, LaPO₄, CaPO₄, YPO₄, MgAl₂O₄ undYBO₃, deren mittlere Partikelgröße jeweils zwischen 100 nm und 500 nm liegt, enthält.

12. Plasmabildschirm nach Anspruch 10,
**dadurch gekennzeichnet**,
dass die UV-Licht reflektierende Schicht eine Schichtabfolge aus abwechselnden Schichten mit einem Brechungsindex n ≥ 1.7 und mit Schichten mit einem Brechungsindex n ≤ 1.5 enthält.

13. Plasmabildschirm nach Anspruch 1,
**dadurch gekennzeichnet**,
dass in den Leuchtstoffschichten (10) auf der Trägerplatte (2) der blau-emittierende Leuchtstoff BaMgAl₁₀O₁₇:Eu, der grün-emittierende Leuchtstoff ausgewählt aus der Gruppe Zn₂SiO₄:Mn und BaMgAl₁₀O₁₇:Eu,Mn und der rot-emittierende Leuchtstoff ausgewählt aus der Gruppe (Y,Gd)BO₃:Eu, Y₂O₃:Eu und Y(V,P)O₄:Eu ist.
